# FASCICULE DE BREVET EUROPEEN

(11) **EP 1 705 406 B1**
(45) Date de publication et mention de la délivrance du brevet: **14.05.2008**
(21) Numéro de dépôt: 06300236.4
(22) Date de dépôt: 16.03.2006
(51) Int. Cl.: F16H 61/04, F16H 3/12

(54) **Boîte de vitesses de véhicule automobile et un procédé de changement de rapport pour une telle boîte de vitesses**
Kraftfahrzeuggetriebe und Verfahren zum Schalten eines solchen Getriebes
Transmission gearbox for motor vehicle and method for shifting gears of such a transmission

(30) Priorité: 21.03.2005 FR 0502775
(43) Date de publication de la demande: 27.09.2006
(73) Titulaire: PEUGEOT CITROËN AUTOMOBILES S.A., 78140 Vélizy Villacoublay (FR)
(72) Inventeur: Schaeffer, Eric, 92250, La Garenne-Colombes (FR)

(56) Documents cités:
- WO-A-03/016747
- DE-A1- 19 725 512
- US-A- 4 023 443
- US-B1- 6 440 031
- PATENT ABSTRACTS OF JAPAN vol. 018, no. 432 (M-1654), 11 août 1994 (1994-08-11) & JP 06 129533 A (HINO MOTORS LTD), 10 mai 1994 (1994-05-10)

## Description

L'invention concerne en général une boîte de vitesses de véhicule automobile et un procédé de changement de rapport pour une telle boîte de vitesses.

Plus précisément, l'invention concerne, selon un premier aspect, une boîte de vitesses de véhicule automobile conforme au préambule la revendication 1.

Les boîtes de vitesses de ce type sont connues de l'état de la technique, notamment du document US-B1-6 440 031. Ce document divulgue un système relativement complexe et encombrant basé sur une architecture à embrayages principal et secondaire et des moyens de freinage couplés à l'embrayage secondaire ou à un train épicycloïdal pour réaliser la synchronisation de rapports de vitesses à partir d'un dispositif de crabotage lui-même dépourvu de moyen de synchronisation.
Dans ce contexte, la présente invention a pour but de proposer une boîte de vitesses d'architecture plus simple et plus compacte que les boîtes de l'état de la technique.

A cette fin, la boîte de vitesses de l'invention, du type décrit ci-dessus, est essentiellement caractérisée par la partie caractérisante de la revendication 1.

Selon l'invention, les pignons fixes du rapport de première et du rapport intermédiaire de seconde sont montés sur l'arbre primaire, et les pignons fixes des rapports intermédiaires de troisième, quatrième et cinquième et du rapport maximum sont montés sur l'arbre secondaire et le capteur est adapté pour mesurer la vitesse de rotation du pignon fixe du rapport intermédiaire de seconde.

L'invention concerne également un procédé de changement de rapport de démultiplication pour une boîte de vitesses présentant les caractéristiques ci-dessus, caractérisé en ce qu'il comprend les étapes suivantes, en cas de passage montant d'un rapport relativement moins élevé au rapport intermédiaire déterminé :
1/ désaccouplement des arbres primaire et secondaire ;
2/ synchronisation du pignon fou d'un rapport plus élevé que le rapport intermédiaire déterminé, auquel des moyens de synchronisation sont associés, jusqu'à ce que le rapport de démultiplication intermédiaire déterminé soit atteint ;
3/ accouplement des arbres primaire et secondaire par l'intermédiaire de la paire de pignons correspondant au rapport de démultiplication intermédiaire déterminé.

De plus, le procédé comprend les étapes suivantes en cas de passage descendant d'un rapport relativement plus élevé au rapport intermédiaire déterminé :
1/ désaccouplement des arbres primaire et secondaire ;
2/ synchronisation du pignon fou d'un rapport moins élevé que le rapport intermédiaire déterminé, auquel des moyens de synchronisation sont associés, jusqu'à ce que le rapport de démultiplication intermédiaire déterminé soit atteint ;
3/ accouplement des arbres primaire et secondaire par l'intermédiaire de la paire de pignons correspondant au rapport de démultiplication intermédiaire déterminé.

L'invention concerne enfin un véhicule comprenant une boîte de vitesses présentant les caractéristiques ci-dessus et un capteur de vitesse longitudinale du véhicule relié à l'entrée du paramètre représentatif de la vitesse de rotation de l'arbre secondaire de la boîte de vitesses.

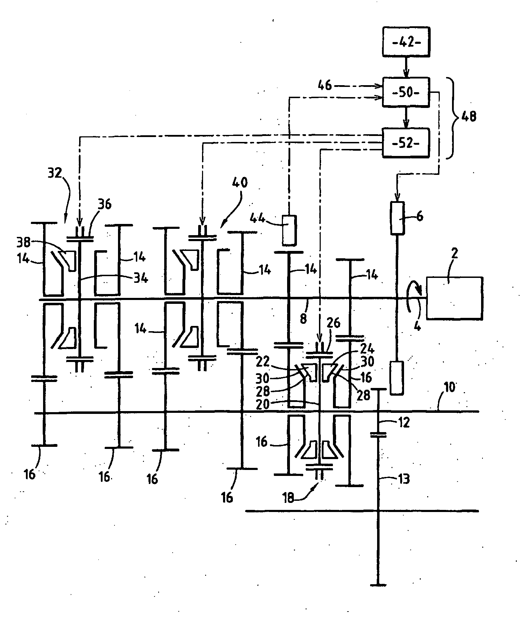

D'autres caractéristiques et avantages de l'invention ressortiront de la description qui en est faite ci-dessous, à titre indicatif et nullement limitatif, en référence à la figure unique annexée représentant une vue schématique développée en coupe de la boîte de vitesses de l'invention.

La boîte de vitesses représentée sur la figure est destinée à être utilisée dans un véhicule automobile comprenant un moteur 2, un arbre moteur 4 entraîné en rotation par le moteur 2, un embrayage 6 solidarisant sélectivement en rotation l'arbre moteur 4 et un arbre primaire 8 de la boîte de vitesses, et un différentiel (non représenté) entraîné en rotation par un arbre secondaire 10 de la boîte de vitesses et entraînant lui-même en rotation les roues du véhicule (également non représentées).

L'embrayage 6 est susceptible d'adopter des positions ouverte ou fermée.

En position ouverte de l'embrayage 6, l'arbre primaire 8 est libre en rotation par rapport à l'arbre moteur 4. En position fermée de l'embrayage 6, l'arbre primaire 8 est solidaire en rotation de l'arbre moteur 4. L'arbre secondaire 10 est lié en rotation en permanence au différentiel et donc aux roues.

Comme on le voit sur la figure, la boîte de vitesses comprend, outre les arbres primaire 8 et secondaire 10, un pignon intermédiaire 12 lié en rotation à l'arbre secondaire 10, et une pluralité de paires de pignons accouplant sélectivement en rotation les arbres primaire 8 et secondaire 10 et définissant un rapport de démultiplication entre la vitesse de rotation de l'arbre primaire 8 et celle de l'arbre secondaire 10 propre à chaque paire.

Le pignon intermédiaire 12 engrène une couronne de pont 13 qui entraîne elle-même le différentiel.

Dans l'exemple de réalisation illustré, la boîte comprend six rapports de démultiplication de marche avant différents, et comprend donc six paires de pignons. Un rapport de démultiplication est défini comme étant le rapport de la vitesse de rotation de l'arbre secondaire 10 divisé par la vitesse de rotation de l'arbre primaire 8 quand la paire de pignons correspondant au rapport accouple en rotation les arbres primaire 8 et secondaire 10.

On appelle rapport de première le rapport de démultiplication le plus bas, rapport de seconde le rapport de démultiplication immédiatement supérieur, et ainsi de suite jusqu'au rapport de sixième, qui est le rapport de démultiplication maximum, c'est-à-dire le plus élevé.

Chaque paire de pignons comprend un pignon menant 14 solidaire en rotation de l'arbre primaire 8 ou monté fou autour de cet arbre primaire 8, et un pignon mené 16 solidaire en rotation de l'arbre secondaire 10 ou monté fou autour de l'arbre secondaire 10. Les pignons menant 14 et mené 16 d'une même paire engrènent en permanence l'un avec l'autre.

Les pignons menants 14 sont alignés le long de l'arbre primaire 8, le pignon menant 14 du rapport de première, c'est-à-dire du rapport de démultiplication le plus faible, étant situé le plus à droite sur la figure, le pignon menant 14 du rapport de seconde, c'est-à-dire du rapport de démultiplication immédiatement supérieur au rapport de première, étant situé à la gauche du pignon menant 14 du rapport de première, et ainsi de suite. Le pignon menant 14 du rapport de sixième, c'est-à-dire du rapport de démultiplication le plus élevé, est situé à l'extrême gauche de l'arbre primaire 8 sur la figure.

Les pignons menants 14 des rapports de première et de seconde sont solidaires en rotation de l'arbre primaire 8. Les pignons menants 14 des quatre autres rapports sont montés fous autour de l'arbre primaire 8.

De manière symétrique, les pignons menés 16 sont alignés le long de l'arbre secondaire 10. Le pignon mené 16 du rapport de première est situé à droite de l'arbre secondaire 10, le pignon mené 16 du rapport de seconde est situé immédiatement à gauche du pignon mené 16 du rapport de première, et ainsi de suite. Le pignon mené 16 du rapport de sixième est situé à l'extrême gauche de l'arbre secondaire 10 sur la figure. Les pignons menés 16 des rapports de première et de seconde sont montés fous autour de l'arbre secondaire 10, les pignons menés 16 des quatre autres rapports étant solidaires en rotation de l'arbre secondaire 10.

Les pignons menants 14 sont de tailles croissantes de la droite vers la gauche de l'arbre primaire 8, le pignon menant 14 du rapport de première étant de diamètre inférieur au pignon menant 14 du rapport de seconde, le pignon menant 14 du rapport de seconde étant de taille inférieure au pignon menant 14 du rapport de troisième et ainsi de suite.

Inversement, les pignons menés 16 sont de tailles décroissantes de la droite vers la gauche de l'arbre secondaire 10. Ainsi, le pignon mené 16 du rapport de première est de taille supérieure au pignon mené 16 du rapport de seconde, le pignon mené 16 du rapport de seconde est de taille supérieure au pignon mené 16 du rapport de troisième et ainsi de suite.

La boîte de vitesses comprend un dispositif de synchronisation 18 double, apte à synchroniser sélectivement en rotation avec l'arbre secondaire 10 le pignon mené 16 du rapport de première ou le pignon mené 16 du rapport de seconde. Le dispositif de synchronisation 18, une fois le pignon 16 et l'arbre secondaire 10 synchronisés à la même vitesse de rotation, est apte à solidariser en rotation le pignon mené 16 et l'arbre secondaire 10 par crabotage.

Comme on le voit sur la figure, le dispositif de synchronisation 18 est interposé entre les pignons menés 16 des rapports de première et de seconde.

Le dispositif de synchronisation 18 comprend un moyeu de synchronisation 20 solidaire en rotation de l'arbre secondaire 10, deux bagues de synchronisation 22 et 24 disposés axialement de part et d'autre du moyeu de synchronisation 20, et un manchon 26 susceptible d'être déplacé axialement le long de l'arbre secondaire 10, à partir d'une position neutre, vers le pignon mené 16 du rapport de première ou vers le pignon mené 16 du rapport de seconde. Les bagues 22 et 24 sont interposées entre le moyeu de synchronisation 20 et les deux pignons menés 16. En position neutre, les pignons menés 16 des rapports de première et de seconde sont libres en rotation par rapport à l'arbre secondaire 10. Quand le manchon 26 est déplacé vers l'un des pignons menés 16, il adopte d'abord une position de synchronisation dans laquelle le manchon 26 sollicite l'une des bagues 22 ou 24 vers le pignon mené 16, de façon à ce qu'une portée de friction 28 de la bague 22 ou 24 frotte contre une zone de friction complémentaire 30 du pignon mené 16, puis une position de crabotage dans laquelle le manchon 26 solidarise en rotation le pignon mené 16 et l'arbre secondaire 10. Le frottement entre la bague de synchronisation 22 ou 24 et le pignon mené a pour effet de ralentir ou d'accélérer, selon les cas, la vitesse de rotation du pignon mené 16.

Le manchon 26 n'est susceptible d'adopter sa position de crabotage que quand les vitesses de rotation de l'arbre secondaire 10 et du pignon mené 16 sont égales.

La boîte de vitesses comprend encore un premier dispositif mixte 32 disposé entre les pignons menants 14 des rapports de démultiplication de cinquième et sixième. Le dispositif mixte 32 est à la fois un dispositif de synchronisation du pignon menant 14 du rapport de sixième avec l'arbre primaire 8, et un dispositif de crabotage, dépourvu de moyens de synchronisation, du pignon menant 14 du rapport de cinquième avec l'arbre primaire 8.

Le dispositif mixte 32 comprend un moyeu de synchronisation 34 solidaire de l'arbre primaire 8, un manchon de crabotage 36 solidaire en rotation du moyeu de synchronisation 34 et mobile axialement le long de l'arbre primaire 8 vers le pignon menant 14 du rapport de cinquième ou celui du rapport de sixième, et une bague de synchronisation 38 interposé entre le moyeu de synchronisation 34 et le mignon menant 14 du rapport de sixième. Le manchon 36 est susceptible d'adopter une position neutre dans laquelle ni le pignon menant 14 du cinquième rapport de démultiplication ni le pignon menant 14 du sixième rapport de démultiplication n'est solidaire en rotation de l'arbre primaire 8, ces pignons tournant alors fous autour de l'arbre primaire 8.

Quand le manchon 36 est déplacé, à partir de sa position neutre vers le pignon menant 14 du rapport de sixième, il adopte d'abord une position de synchronisation dans laquelle la bague 38 frotte contre le pignon menant 14, puis une position de crabotage dans laquelle le manchon 36 solidarise en rotation ledit pignon menant 14 et l'arbre primaire 8 quand la vitesse de rotation du pignon menant 14 est égale à celle de l'arbre primaire 8. Le frottement de la bague de synchronisation 38 sur le pignon menant 14 a pour fet de ralentir la vitesse de rotation de l'arbre primaire 8, du fait que le pignon menant du rapport de sixième, pour une vitesse de rotation donnée de l'arbre secondaire 10, tourne plus lentement que les autres pignons menants.

Quand le manchon 36 est déplacé à partir de sa position neutre vers le pignon menant 14 du cinquième rapport, il adopte une position de crabotage dans laquelle le pignon menant 14 du rapport de cinquième est solidaire de l'arbre primaire 8 en rotation. Le manchon 36 n'est susceptible de passer de sa position neutre à ladite position de crabotage que si les vitesses de rotation de l'arbre primaire 8 et du pignon 14 à craboter sont pratiquement égales.

La boîte de vitesses comprend encore un second dispositif mixte 40, disposé entre les pignons menants 14 des rapports de démultiplication de troisième et de quatrième. Ce second dispositif 40 est à la fois un dispositif de synchronisation du pignon menant 14 du rapport de quatrième avec l'arbre primaire 8 et un dispositif de crabotage, dépourvu de moyens de synchronisation, du pignon menant 14 du rapport de troisième avec l'arbre primaire 8.

Il est semblable au premier dispositif mixte 32, et ne sera pas décrit en détail ici.

La boîte de vitesses est de type robotisé et comprend un organe de commande 42 du passage d'un rapport de démultiplication à un autre, susceptible d'être actionné par le conducteur du véhicule automobile, un capteur 44 de mesure de la vitesse de rotation du pignon menant 14 du rapport de seconde, une entrée 46 d'un paramètre représentatif de la vitesse de rotation de l'arbre secondaire 10, et des moyens 48 de pilotage de la boîte de vitesses.

La vitesse de rotation du pignon menant 14 du rapport de seconde est égale à la vitesse de rotation de l'arbre primaire 8 du fait que ce pignon 14 est solidaire en rotation de l'arbre primaire 8.

Le paramètre représentatif de la vitesse de rotation de l'arbre secondaire 10 est la vitesse longitudinale du véhicule, la vitesse de rotation de l'arbre secondaire 10 étant directement liée à cette vitesse longitudinale, du fait que l'arbre secondaire 10 est lié en rotation en permanence aux roues du véhicule. Le véhicule comporte un capteur de vitesse qui est relié à l'entrée 46.

Les moyens de pilotage 48 comprennent un calculateur 50 et des actionneurs 52 du dispositif de synchronisation 18 et des premier et second dispositifs mixtes 32 et 40.

Le calculateur 50 reçoit les ordres de l'organe de commande 42, et est renseigné par le capteur de vitesse 44 et par l'entrée du paramètre représentatif 46. Le calculateur 50 pilote les différents actionneurs 52. Les actionneurs 52 sont aptes à déplacer les manchons de crabotage du dispositif de synchronisation 18 et des premier et second dispositifs mixtes 32 et 40, dans un sens ou dans l'autre le long des arbres primaire et secondaire 8 et 10.

Le calculateur 50 est en outre apte à commander l'ouverture et la fermeture de l'embrayage 6 quand il reçoit de l'organe de commande 42 un ordre de passage de rapport.

On va maintenant décrire le fonctionnement de la boîte de vitesse, en cas de passage montant à un rapport dont le pignon fou est associé à un dispositif de crabotage dépourvu de moyens de synchronisation. Dans l'exemple de réalisation de la figure, ces rapports sont les rapports de troisième et de cinquième.

Quand le conducteur du véhicule actionne l'organe de commande 42 en demandant le passage du rapport de quatrième au rapport de cinquième, le calculateur 50 commande d'abord l'ouverture de l'embrayage, puis le désaccouplement des arbres primaire 8 et secondaire 10 en décrabotant le pignon fou du rapport de quatrième.

Il actionne, pour cela, l'actionneur 52 correspondant au second dispositif mixte 40.

Le calculateur 50 commande ensuite l'actionnement du premier dispositif mixte 32, par déplacement du manchon 36 vers le pignon menant 14 du rapport de sixième, à partir de la position neutre vers la position de synchronisation, de façon à créer une friction entre la bague 38 et le pignon me nant 14 du rapport de sixième.

Cette friction a pour effet de ralentir la vitesse de rotation de l'arbre primaire 8. En effet, la vitesse de rotation du pignon menant 14 du rapport de sixième est sensiblement constante, puisque ce pignon est lié en rotation en permanence à l'arbre secondaire 10, lui-même lié en rotation en permanence aux roues du véhicule. Dans le court laps de temps nécessaire pour effectuer le changement de rapport, la vitesse du véhicule est sensiblement constante. Par ailleurs, quand le rapport de quatrième est engagé, l'arbre primaire 8 tourne plus vite que le pignon menant 14 du rapport de sixième. La friction créée par l'actionnement du premier dispositif mixte 32 a donc nécessairement pour effet de ralentir la vitesse de rotation de l'arbre primaire 8.

Le calculateur 50 scrute en permanence les vitesses de rotation des arbres primaire 8 et secondaire 10. Quand le rapport de la vitesse de rotation de l'arbre secondaire 10 sur la vitesse de rotation de l'arbre primaire 8 augmente jusqu'à la valeur correspondant au rapport de cinquième, du fait du ralentissement de l'arbre primaire 8, le calculateur 50 commande l'arrêt de la synchronisation du pignon menant 14 du rapport de sixième avec l'arbre primaire 8. L'actionneur 52 ramène le manchon de crabotage 36 dans sa position neutre. Le ralentissement de l'arbre primaire 8 cesse.

Le calculateur 50 commande ensuite l'engagement du rapport de démultiplication de cinquième, par crabotage du pignon menant 14 du rapport de cinquième avec l'arbre primaire 8. Pour ce faire, il actionne l'actionneur 52 du premier dispositif mixe 32, de façon à déplacer le manchon 36 à sa position de crabotage du pignon menant 14 du rapport de cinquième. Le crabotage de ce pignon menant 14 avec l'arbre primaire 8 peut être réalisé du fait que les vitesses de rotation du pignon et de l'arbre sont synchronisées.

Le calculateur 50 commande enfin la fermeture de l'embrayage 6, ce qui a pour effet d'accoupler l'arbre primaire 8 et l'arbre moteur 4.

La procédure pour effectuer un changement de rapport montant du rapport de seconde au rapport de troisième est similaire à celle qui a été décrite ci-dessus. Toutefois, le ralentissement de l'arbre primaire 8 est réalisé, dans ce cas, à l'aide du second dispositif mixte 40, en synchronisant le pignon menant 14 du rapport de quatrième avec l'arbre primaire 8.

Les autres passages montants, c'est-à-dire les passages du rapport de première au rapport de seconde, du rapport de troisième au rapport de quatrième et du rapport de cinquième au rapport de sixième, sont effectués de manière classique, en ralentissant l'arbre primaire 8 à l'aide des moyens de synchronisation associés au rapport à engager.

Dans le cas d'un passage de rapport descendant, du rapport de sixième au rapport de cinquième, le calculateur 50 commande d'abord l'ouverture de l'embrayage 6. Il commande ensuite le désaccouplement des arbres primaire 8 et secondaire 10 en décrabotant le pignon fou du rapport de sixième. A cet effet, le calculateur 50 actionne l'actionneur 52 correspondant au premier dispositif mixte 32, de façon à faire passer le manchon 36 dans sa position neutre.

Le calculateur 50 commande ensuite l'actionnement du second dispositif mixte 40, de façon à déplacer le manchon de ce second dispositif mixte 40 de sa position neutre à sa position de synchronisation du pignon menant 14 du rapport de quatrième avec l'arbre primaire 8, ce qui a pour effet de créer une friction entre la bague de synchronisation du second dispositif mixe 40 et la surface de friction complémentaire ménagée sur le pignon mené 14 du rapport de quatrième.

Cette friction a pour effet d'accélérer progressivement la vitesse de rotation de l'arbre primaire. En effet, quand le rapport de sixième est engagé, le pignon menant 14 du rapport de sixième et l'arbre primaire 8 tournent moins vite que les pignons menants 14 de tous les autres rapports. La friction créée par l'actionnement du second dispositif mixte 40 a donc nécessairement pour effet d'accélérer la rotation de l'arbre primaire 8.

Les moyens de calcul 50 scrutent en permanence les vitesses de rotation des arbres primaire 8 et secondaire 10 et quand le rapport de la vitesse de l'arbre secondaire 10 sur la vitesse de l'arbre primaire 8 a atteint le niveau correspondant au rapport de démultiplication moins élevé recherché, du fait de l'accélération de la vitesse de rotation de l'arbre primaire 8, le calculateur 50 commande que l'actionnement du second dispositif mixte 40 soit arrêté. L'actionneur 52 correspondant ramène le manchon du second dispositif mixte 40 à sa position neutre

Le calculateur 52 commande alors le crabotage du pignon menant du rapport de cinquième, de façon à accoupler de nouveau les arbres primaire 8 et secondaire 10.

Enfin, le calculateur 50 commande la fermeture de l'embrayage 6, de façon à lier en rotation l'arbre moteur 4 et l'arbre primaire 8 de la boîte de vitesses.

Une procédure similaire est utilisée pour le passage descendant du rapport de quatrième au rapport de troisième. Toutefois, l'accélération de la vitesse de rotation de l'arbre primaire 8 est réalisée, dans ce cas, en synchronisant le pignon mené 16 du rapport de seconde avec l'arbre secondaire 10, par l'intermédiaire du dispositif de synchronisation 18.

En effet, quand le rapport de quatrième est engagé, le pignon mené 16 du rapport de seconde tourne moins vite que l'arbre secondaire 10. Le pignon menant 14 du rapport de seconde tourne à la même vitesse que le pignon menant 14 du rapport de quatrième, mais le pignon mené 16 du rapport de seconde tourne moins vite que le pignon mené 16 du rapport de quatrième, puisque le rapport de démultiplication de seconde est inférieur au rapport de démultiplication de quatrième.

La friction créée par l'actionnement du dispositif de synchronisation 18 a donc pour effet d'accélérer le pignon mené 16 du rapport de seconde, et donc d'accélérer la vitesse de rotation de l'arbre primaire 8.

Les autres passages de rapport descendants, c'est-à-dire les passages descendants du rapport de cinquième au rapport de quatrième, du rapport de troisième au rapport de seconde et du rapport de seconde au rapport de première, sont réalisés de manière classique, en ralentissant l'arbre primaire à l'aide des moyens de synchronisation associés au rapport à engager.

La boîte de vitesse décrite ci-dessus peut présenter de multiples variantes sans sortir du cadre de l'invention.

Elle peut comprendre plus de quatre rapports de démultiplication auxquels sont associés des moyens de synchronisation, ou moins de quatre rapports auxquels sont associés des moyens de synchronisation. Au minimum, des moyens de synchronisation doivent être associés au rapport de première et au rapport maximum de la boîte de vitesses.

La boîte de vitesses peut comprendre moins de six paires de pignons de marche avant, par exemple quatre ou cinq paires de pignons de marche avant, ou plus de six paires de pignons de marche avant, par exemple sept.

Les moyens de synchronisation peuvent être associés à d'autres rapports de démultiplication que dans l'exemple de réalisation de la figure, par exemple être associés aux rapports de première, de troisième, de cinquième et de sixième.

Les pignons fous et les pignons fixes peuvent être répartis sur les arbres primaire et secondaires d'une autre façon que dans l'exemple de réalisation de la figure. Par exemple, les pignons fous des rapports de troisième, de quatrième, de cinquième et de sixième peuvent être montés autour de l'arbre secondaire, et les pignons fous des rapports de première et de seconde-autour de l'arbre primaire. Toute autre répartition est envisageable.

Il est avantageux qu'un rapport auquel est associé un dispositif de crabotage dépourvu de moyens de synchronisation soit encadré par deux rapports auxquels sont associés des moyens de synchronisation. En cas de passage montant pour engager ledit rapport, on utilise, pour ralentir la vitesse de rotation de l'arbre primaire les moyens de synchronisation du rapport immédiatement supérieur. Inversement, en cas de passage descendant, on utilise les moyens de synchronisation immédiatement inférieurs. Ces moyens sont bien dimensionnés pour accepter le couple d'accélération ou de ralentissement de l'arbre primaire.

On comprend bien que la boîte de vitesses décrite ci-dessus présente de multiples avantages.

L'encombrement axial de la boîte de vitesses, c'est-à-dire son encombrement suivant une direction parallèle à l'arbre primaire 2 est réduit. En effet, cet encombrement est déterminé, entre autres, par l'empilement des cotes nécessaires pour loger les premier et second dispositifs mixtes et le dispositif de synchronisation. Or, l'encombrement axial d'un dispositif de crabotage dépourvu de moyens de synchronisation est nettement plus court que l'encombrement axial d'un synchroniseur. De ce fait, l'encombrement axial de la boîte de vitesses selon l'invention et réduit par rapport à l'encombrement axial d'une boîte de vitesses comprenant trois synchroniseurs doubles associés aux six paires de pignons de marche avant.

De plus, le coût de la boîte de vitesses décrite ci-dessus est réduit, du fait qu'elle comprend deux dispositifs mixtes en lieu et place de deux synchroniseurs double. En effet, le coût d'un dispositif mixte est nettement inférieur au coût d'un synchroniseur.

On peut souligner également que cette boîte de vitesses ne comprend qu'un seul capteur, ce qui est favorable d'un point de vue coût et d'un point de vue fiabilité.

## Revendications

1. Boîte de vitesses de véhicule automobile comprenant un arbre primaire (8) propre à être entraîné en rotation par un moteur (2), un arbre secondaire (10) propre à entraîner les roues du véhicule, et une pluralité de paires de pignons (14, 16) accouplant sélectivement en rotation les arbres primaire et secondaire (8, 10) et définissant des rapports de démultiplication entre la vitesse de rotation de l'arbre primaire (8) et celle de l'arbre secondaire (10) propre à chaque paire, la boîte présentant au moins un rapport de première, au moins un rapport intermédiaire et un rapport maximum, croissants dans cet ordre, chaque paire comprenant un pignon (14, 16) monté fou autour de l'un de l'arbre primaire (8) ou de l'arbre secondaire (10) et un pignon (14, 16) monté fixe sur l'autre de l'arbre primaire (8) ou de l'arbre secondaire (10) et engrenant le pignon fou, la boîte comprenant encore une pluralité de moyens de synchronisation associés au rapport de première et au rapport maximum, chacun apte à synchroniser sélectivement en rotation le pignon fou (14, 16) du rapport associé avec l'arbre (8, 10) autour duquel il est monté puis à solidariser le pignon fou (14, 16) et l'arbre (8, 10) en rotation, et un organe de commande (42) du passage d'un rapport de démultiplication à un autre, la boîte comprenant, pour au moins une paire de pignons (14, 16) d'un rapport intermédiaire déterminé, un dispositif de crabotage dépourvu de moyens de synchronisation et apte à solidariser en rotation le pignon fou (14, 16) de ladite paire de pignon dudit rapport intermédiaire déterminé à l'arbre (8, 10) autour duquel il est monté, un capteur de mesure (44) d'une grandeur représentative de la vitesse de rotation de l'arbre primaire (8), une entrée (46) d'un paramètre représentatif de la vitesse de rotation de l'arbre secondaire (10), et des moyens (48) de pilotage de la boîte de vitesses renseignés par le capteur de vitesse (44) et par l'entrée (46) et recevant des ordres de l'organe de commande (42) du passage de rapport, les moyens (48) de pilotage étant aptes à commander, en cas d'ordre de passage montant audit rapport intermédiaire déterminé, la synchronisation d'un pignon fou (14, 16) d'un rapport plus élevé jusqu'à ce que le capteur (44) indique que le rapport de démultiplication intermédiaire déterminé est atteint, **caractérisée en ce qu'**elle comprend, un rapport intermédiaire de seconde, immédiatement supérieur au rapport de première, et des moyens de synchronisation associés à ce rapport intermédiaire de seconde, et **en ce qu'**elle comprend des rapports intermédiaires de troisième, quatrième et cinquième, croissants à partir du rapport intermédiaire de seconde dans cet ordre, la boîte comprenant pour ces rapports respectivement un dispositif de crabotage dépourvu de moyens de synchronisation, des moyens de synchronisation et un dispositif de crabotage dépourvu de moyens de synchronisation.

2. Boîte selon la revendication 1, **caractérisée en ce que** les pignons fixes (14) du rapport de première et du rapport intermédiaire de seconde sont montés sur l'arbre primaire (8), et les pignons fixes (16) des rapports intermédiaires de troisième, quatrième et cinquième et du rapport maximum sont montés sur l'arbre secondaire (10).

3. Boîte selon la revendication 2, **caractérisée en ce que** le capteur (44) est adapté pour mesurer la vitesse de rotation du pignon fixe (14) du rapport intermédiaire de seconde.

4. Procédé de changement de rapport de démultiplication d'une boîte selon l'une quelconque des revendications 1 à 3, **caractérisé en ce qu'**il comprend les étapes suivantes en cas de passage montant d'un rapport relativement moins élevé au rapport intermédiaire déterminé :
1/ désaccouplement des arbres primaire (8) et secondaire (10) ;
2/ synchronisation du pignon fou (14, 16) d'un rapport plus élevé que le rapport intermédiaire déterminé, auquel des moyens de synchronisation sont associés, jusqu'à ce que le rapport de démultiplication intermédiaire déterminé soit atteint ;
3/ accouplement des arbres primaire (8) et secondaire (10) par l'intermédiaire de la paire de pignons (14, 16) correspondant au rapport de démultiplication intermédiaire déterminé.

5. Procédé selon la revendication 4, **caractérisé en ce qu'**il comprend les étapes suivantes en cas de passage descendant d'un rapport relativement plus élevé au rapport intermédiaire déterminé :
1/ désaccouplement des arbres primaire (8) et secondaire (10) ;
2/ synchronisation du pignon fou (14, 16) d'un rapport moins élevé que le rapport intermédiaire déterminé, auquel des moyens de synchronisation sont associés, jusqu'à ce que le rapport de démultiplication intermédiaire déterminé soit atteint ;
3/ accouplement des arbres primaire (8) et secondaire (10) par l'intermédiaire de la paire de pignons (14, 16) correspondant au rapport de démultiplication intermédiaire déterminé.

6. Véhicule automobile comprenant une boîte de vitesses selon l'une quelconque des revendications 1 à 3, et un capteur de vitesse longitudinale du véhicule relié à l'entrée (46) du paramètre représentatif de la vitesse de rotation de l'arbre secondaire (10) de la boîte de vitesses.

## Claims

1. Motor vehicle gearbox comprising a primary shaft (8) which can be driven to rotate by an engine (2), a secondary shaft (10) which can drive the wheels of the vehicle, and a plurality of pairs of gears (14, 16) selectively coupling in rotation the primary and secondary shafts (8, 10) and defining reduction ratios between the speed of rotation of the primary shaft (8) and that of the secondary shaft (10) specific to each pair, the gearbox having at least one first-speed ratio, at least one intermediate ratio and a maximum ratio, increasing in this order, each pair comprising a gear (14, 16) mounted idly about one of the shafts consisting of the primary shaft (8) and the secondary shaft (10) and a gear (14, 16) mounted fixedly on the other of the shafts consisting of the primary shaft (8) and the secondary shaft (10) and meshing with the idle gear, the gearbox additionally comprising a plurality of synchronizing means associated with the first-speed ratio and with the maximum ratio, each capable of selectively synchronizing in rotation the idle gear (14, 16) of the associated ratio with the shaft (8, 10) about which it is mounted and then of locking the idle gear (14, 16) and the shaft (8, 10) in rotation, and a selection member (42) for shifting from one reduction ratio to another, the gearbox comprising, for at least one pair of gears (14, 16) of a given intermediate ratio, a dog-clutching device devoid of synchronizing means and capable of locking in rotation the idle gear (14, 16) of the said gear pair of the said given intermediate ratio to the shaft (8, 10) about which it is mounted, a sensor (44) for measuring a variable representing the speed of rotation of the primary shaft (8), an input (46) for a parameter representing the speed of rotation of the secondary shaft (10), and means (48) for controlling the gearbox that are given information by the speed sensor (44) and by the input (46) and receive orders from the gearshift selection member (42), the control means (48) being designed, when an order is given to upshift to the said given intermediate ratio, to synchronize an idle gear (14, 16) of a higher ratio until the sensor (44) indicates that the given intermediate reduction ratio has been reached, **characterized in that** it comprises a second-speed intermediate ratio, immediately higher than the first-speed ratio, and synchronizing means associated with this second-speed intermediate ratio, and **in that** it comprises third-speed, fourth-speed and fifth-speed intermediate ratios, increasing from the second-speed intermediate ratio in this order, the gearbox respectively comprising for these ratios a dog-clutching device devoid of synchronizing means, synchronizing means, and a dog-clutching device devoid of synchronizing means.

2. Gearbox according to Claim 1, **characterized in that** the fixed gears (14) of the first-speed ratio and of the second-speed intermediate ratio are mounted on the primary shaft (8), and the fixed gears (16) of the third-speed, fourth-speed and fifth-speed intermediate ratios and of the maximum ratio are mounted on the secondary shaft (10).

3. Gearbox according to Claim 2, **characterized in that** the sensor (44) is adapted to measure the speed of rotation of the fixed gear (14) of the second-speed intermediate ratio.

4. Method of changing the reduction ratio of a gearbox according to any one of Claims 1 to 3, **characterized in that** it comprises the following steps when upshifting from a relatively lower ratio to the given intermediate ratio:
1/ uncoupling the primary (8) and secondary (10) shafts;
2/ synchronizing the idle gear (14, 16) of a ratio which is higher than the given intermediate ratio, with which synchronizing means are associated, until the given intermediate reduction ratio has been reached;
3/ coupling the primary (8) and secondary (10) shafts by way of the pair of gears (14, 16) corresponding to the given intermediate reduction ratio.

5. Method according to Claim 4, **characterized in that** it comprises the following steps when downshifting from a relatively higher ratio to the given intermediate ratio:
1/ uncoupling the primary (8) and secondary (10) shafts;
2/ synchronizing the idle gear (14, 16) of a ratio which is lower than the given intermediate ratio, with which synchronizing means are associated, until the given intermediate reduction ratio has been reached;
3/ coupling the primary (8) and secondary (10) shafts by way of the pair of gears (14, 16) corresponding to the given intermediate reduction ratio.

6. Motor vehicle comprising a gearbox according to any one of Claims 1 to 3, and a sensor for detecting the longitudinal speed of the vehicle that is connected to the input (46) for the parameter representing the speed of rotation of the secondary shaft (10) of the gearbox.

## Patentansprüche

1. Kraftfahrzeug-Schaltgetriebe mit einer Hauptwelle (8), die von einem Motor (2) in Drehung versetzt werden kann, mit einer Nebenwelle (10), die die Räder des Fahrzeugs antreiben kann, und mit mehreren Paaren von Zahnrädern (14, 16), die die Haupt- und Nebenwelle (8, 10) selektiv in Drehung koppeln und Übersetzungsverhältnisse zwischen der Drehgeschwindigkeit der Hauptwelle (8) und derjenigen der Nebenwelle (10) definieren, die jedem Paar eigen ist, wobei das Getriebe mindestens ein erstes Übersetzungsverhältnis, mindestens ein Zwischenübersetzungsverhältnis und mindestens ein höchstes Übersetzungsverhältnis aufweist, die in dieser Reihenfolge ansteigen, wobei jedes Paar ein Zahnrad (14, 16), das freilaufend entweder um die Hauptwelle (8) oder um die Nebenwelle (10) montiert ist, und ein Zahnrad (14, 16) aufweist, das ortsfest auf die andere, die Hauptwelle (8) oder die Nebenwelle (10), montiert ist und in das Freilaufzahnrad eingreift, wobei das Getriebe noch mehrere dem ersten Übersetzungsverhältnis und dem höchsten Übersetzungsverhältnis zugeordnete Synchronisationseinrichtungen, die jede in der Lage sind, das Freilaufzahnrad (14, 16) des zugeordneten Übersetzungsverhältnisses mit der Welle (8, 10), um die es montiert ist, selektiv in Drehung zu synchronisieren und dann das Freilaufzahnrad (14, 16) und die Welle (8, 10) in Drehung fest miteinander zu verbinden, und ein Steuerorgan (42) des Übergangs von einem Übersetzungsverhältnis zur anderen aufweist, wobei das Getriebe für mindestens ein Paar von Zahnrädern (14, 16) eines bestimmten Zwischenübersetzungsverhältnisses eine Klauenkupplungsvorrichtung ohne Synchronisationseinrichtungen, die in der Lage ist, das Freilaufzahnrad (14, 16) des Paars von Zahnrädern des bestimmten Zwischenübersetzungsverhältnisses mit der Welle (8, 10), um die es montiert ist, in Drehung fest zu verbinden, einen Messsensor (44) einer Größe, die für die Drehgeschwindigkeit der Hauptwelle (8) repräsentativ ist, einen Eingang (46) eines Parameters, der für die Drehgeschwindigkeit der Nebenwelle (10) repräsentativ ist, und Einrichtungen (48) zur Steuerung des Schaltgetriebes aufweist, die vom Geschwindigkeitssensor (44) und von dem Eingang (46) informiert werden und Befehle vom Steuerorgan (42) des Übersetzungsverhältnisübergangs empfangen, wobei die Steuereinrichtungen (48) in der Lage sind, im Fall eines ansteigenden Übergangsbefehls an das bestimmte Zwischenübersetzungsverhältnis die Synchronisation eines Freilaufzahnrads (14, 16) eines höheren Übersetzungsverhältnisses zu steuern, bis der Sensor (44) anzeigt, dass das bestimmte Zwischenübersetzungsverhältnis erreicht ist, **dadurch gekennzeichnet, dass** es ein zweites Zwischenübersetzungsverhältnis direkt über dem ersten Übersetzungsverhältnis und diesem zweiten Zwischenübersetzungsverhältnis zugeordnete Synchronisationseinrichtungen aufweist, und dass es dritte, vierte und fünfte Zwischenübersetzungsverhältnisse aufweist, die ausgehend von dem zweiten Zwischenübersetzungsverhältnis und in dieser Reihenfolge ansteigen, wobei das Getriebe für diese Übersetzungsverhältnisse jeweils eine Klauenkupplungsvorrichtung ohne Synchronisationseinrichtungen, Synchronisationseinrichtungen und eine Klauenkupplungsvorrichtung ohne Synchronisationseinrichtungen aufweist.

2. Getriebe nach Anspruch 1, **dadurch gekennzeichnet, dass** die ortsfesten Zahnräder (14) des ersten Übersetzungsverhältnisses und des zweiten Zwischenübersetzungsverhältnisses auf die Hauptwelle (8) montiert sind, und die ortsfesten Zahnräder (16) der dritten, vierten und fünften Zwischenübersetzungsverhältnisse und des maximalen Übersetzungsverhältnisses auf die Nebenwelle (10) montiert sind.

3. Getriebe nach Anspruch 2, **dadurch gekennzeichnet, dass** der Sensor (44) geeignet ist, um die Drehgeschwindigkeit des ortsfesten Zahnrads (14) des zweiten Zwischenübersetzungsverhältnisses zu messen.

4. verfahren für den Übergang des Übersetzungsverhältnisses eines Getriebes nach einem der Ansprüche 1 bis 3, **dadurch gekennzeichnet, dass** es die folgenden Schritte im Fall eines ansteigenden Übergangs von einem relativ weniger hohen Übersetzungsverhältnis zum bestimmten Zwischenübersetzungsverhältnis aufweist:
1/ Entkopplung der Hauptwelle (8) und der Nebenwelle (10);
2/ Synchronisation des Freilaufzahnrads (14, 16) eines höheren Übersetzungsverhältnisses als das bestimmte Zwischenübersetzungsverhältnis, dem Synchronisationseinrichtungen zugeordnet sind, bis das bestimmte Zwischenübersetzungsverhältnis erreicht ist;
3/ Kopplung der Hauptwelle (8) und der Nebenwelle (10) mittels des Paars von Zahnrädern (14, 16), das dem bestimmten Zwischenübersetzungsverhältnis entspricht.

5. Verfahren nach Anspruch 4, **dadurch gekennzeichnet, dass** es die folgenden Schritte im Fall eines absteigenden Übergangs von einem relativ höheren Übersetzungsverhältnis zum bestimmten Zwischenübersetzungsverhältnis aufweist:
1/ Entkoppeln der Hauptwelle (8) und der Nebenwelle (10);
2/ Synchronisation des Freilaufzahnrads (14, 16) eines weniger hohen Übersetzungsverhältnisses als das bestimmte Zwischenübersetzungsverhältnis, dem Synchronisationseinrichtungen zugeordnet sind, bis das bestimmte Zwischenübersetzungsverhältnis erreicht ist;
3/ Kopplung der Hauptwelle (8) und der Nebenwelle (10) mittels des Paars von Zahnrädern (14, 16), das dem bestimmten Zwischenübersetzungsverhältnis entspricht.

6. Kraftfahrzeug, das ein Schaltgetriebe nach einem der Ansprüche 1 bis 3 und einen Sensor der Längsgeschwindigkeit des Fahrzeugs aufweist, der mit dem Eingang (46) des Parameters verbunden ist, der für die Drehgeschwindigkeit der Nebenwelle (10) des Schaltgetriebes repräsentativ ist.
